# EUROPEAN PATENT APPLICATION

(11) **EP 3 470 945 A1**
(43) Date of publication of application: **17.04.2019**
(21) Application number: 17306397.5
(22) Date of filing: 16.10.2017
(51) Int. Cl.: G05B 23/02

(54) **MACHINE-TO-MACHINE (M2M) COMMUNICATION MONITORING**

(71) Applicant: N-Join Research Ltd., 42507 Netanya (IL)
(72) Inventor: Porag, Elkana, 42507 Netanya (IL); Piratinskiy, Haim, 42507 Netanya (IL); Biran, Or, 42507 Netanya (IL); Cotton, Courtenay, 42507 Netanya (IL)
(74) Representative: Dupuis-Latour, Dominique

(57) **Abstract**

A factory automation and monitoring method includes monitoring streams (155) of data packets of M2M data on a mirrored port (140B, 210B) of a network switch (130) coupled to computing elements (120) of respective machines (110) amongst industrial machinery, determining for the M2M data (170), a corresponding machine and acquiring a contemporaneous state of the corresponding machine. Then, a record is stored in a data store (180) recording an association between the M2M data for each of the data packet streams, the corresponding machine for each of the data packet streams, and the contemporaneous state for the corresponding machine. Subsequently additional M2M data is received in the mirrored port and, in response, one of the machines is identified for the additional M2M data, a record from the data store retrieved for the identified machine, and, on condition that the additional M2M data demonstrates a threshold deviation from data in the retrieved record, an alert (190) is generated.

## Description

### BACKGROUND OF THE INVENTION

### Field of the Invention

The present invention relates to the field of factory automation and more particularly to M2M communications in an automated factory.

### Description of the Related Art

Factory automation refers to the automation of different processes in a chain of processes both sequential and parallel in a manufacturing plant. Factory automation generally involves different machines performing different manufacturing tasks in a manufacturing process including the movement of component parts from one machine to another, and the actuation of machinery operating upon the component parts. For many decades, the programmable logic controller (PLC) has formed the basis of computer driven logic driving the movement of the component parts and the actuation and de-actuation of machinery upon the component parts on the factory floor.

Generally speaking, the PLC is a hardened stand-alone computing device with memory and a processor, a number of inputs and a number of outputs along with program logic that executes in the memory of the PLC and acts upon the state of the inputs by creating different states at the outputs. Programming the PLC is a matter of either directly uploading program code to persistent memory in the PLC over a communications link, or installing a memory already containing the program code onto the logic board of the PLC. Notably, different PLCs are able to communicate with one another so as to provide upstream and downstream messaging from one PLC to another based upon sensed inputs so as to coordinate the operation of the communicating PLCs. As well, different PLCs may communicate with a control apparatus, such as a human machine interface (HMI) or other supervisory computer, as is the case in a supervisory control and data acquisition (SCADA) environment. So much has been referred to as M2M communications, which as a practical matter, may be considered a subset of the "Internet of Things" (IoT) operating on a local, closed computer communications network.

In the most basic configuration of two PLCs communicating with one another, a vast amount of data can be created and exchanged. Yet, the typical factory automation arrangement includes more than a handful of PLCs all interacting with one another over a computer communications network. As such, an unmanageable amount of data will be generated each hour during which the factory remains in operation. Clearly, storing let alone processing this data is not reasonable as an incredible amount of storage space would be required to persist such a vast amount of collected data, and processing such data would require an enormous amount of computing resources performing an extensive number of programmatic operations upon the data. In consequence, it is customary to simply ignore the bulk of data passed through M2M communications. Even still, visualization and analytical tools exist for individual controllers so that an operator could, if desired, analyze trends in data produced by a PLC of interest.

Though M2M communications exist without the closed network, manners of integrating M2M communications into the enterprise exist. In this regard, utilizing Ethernet, M2M communications may be received in an enterprise computer program through an intermediate controller. Those M2M communications may then be used within different enterprise applications, for example, an asset management application, or an enterprise resource planning application. To do so, though, requires the utilization of a standardized communication protocol adopted by the controllers in the factory and also the enterprise systems external to the controllers. To do so, controllers configured to utilize open communications protocols are selected for integration with the enterprise.

### BRIEF SUMMARY OF THE INVENTION

Embodiments of the present invention address deficiencies of the art in respect to factory automation and provide a novel and non-obvious method, system and computer program product for factory automation and monitoring. In an embodiment of the invention, a factory automation and monitoring method is provided. The method includes monitoring streams of data packets of M2M data on a mirrored port of a network switch coupled to computing elements of respective machines amongst industrial machinery disposed in a factory, each of the data packets corresponding to a memory register of a single, corresponding one of the computing elements. In this regard, the M2M data reflects inter-machine data communicated from one machine to another in the factory. The method also includes determining for the M2M data of each of the data packet streams, a corresponding one of the machines amongst the respective machines of the industrial machinery and acquiring a contemporaneous state of at least a portion of the corresponding machine. Then, a record is stored in a data store recording an association between the M2M data for each of the data packet streams, the corresponding machine for each of the data packet streams, and the contemporaneous state for the corresponding machine.

Subsequently additional M2M data is received in an additionally received data packet stream in the mirrored port of the network switch. In response to the receipt of the additional M2M data, one of the machines is identified that corresponds to the additional M2M data. Then, a record from the data store is retrieved for the identified one of the machines. Finally, on the condition that the additional M2M data demonstrates a threshold deviation from data in the retrieved record, an alert is generated in respect to the identified one of the machines. The alert indicates a likely state change of the identified one of the machines from a previously recorded contemporaneous state to a new state. In this way, impending state changes amongst the machinery of the factory can be identified based upon observed changes in data for M2M communications amongst the machinery.

In another embodiment of the invention, a factory automation data processing system is provided. The system includes a network switch that has a multiplicity of different communications ports and a mirrored port communicatively coupled to the multiplicity of different communications ports. Each of the different communications port are communicatively linked to a respective one of a multiplicity of different computing elements for corresponding machines amongst industrial machinery disposed in a factory. The system also includes a host computing platform that has memory and at least one processor communicatively linked to the mirrored port. Finally, the system has a monitoring module that includes program code executing in the memory of the host computing platform.

The program code monitors streams of data packets of M2M data between the computing elements on the mirrored port and determines, for the M2M data of each of the data packet streams, a corresponding one of the machines, each of the data packets corresponding to a memory register of a single, corresponding one of the computing elements. The program code then acquires a contemporaneous state of the corresponding machine and stores, in a data store, a record recording an association between the M2M data for each of the data packet streams, the corresponding machine for each of the data packet streams, and the contemporaneous state for at least a portion of the corresponding machine. Finally, the program code subsequently receives additional M2M data in a subsequently received data packet stream in the mirrored port. In response to the receipt of the additional M2M data in the subsequently received data packet stream, the program code identifies for the additional M2M data, one of the machines and retrieves for the identified one of the machines a record from the data store. On the condition that the additional M2M data demonstrates a threshold deviation from data in the retrieved record, the program code then generates an alert in respect to the identified one of the machines indicating a likely state change of the identified one of the machines from a previously recorded contemporaneous state to a new state.

Additional aspects of the invention will be set forth in part in the description which follows, and in part will be obvious from the description, or may be learned by practice of the invention. The aspects of the invention will be realized and attained by means of the elements and combinations particularly pointed out. It is to be understood that both the foregoing general description and the following detailed description are exemplary and explanatory only and are not restrictive of the invention.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration of a factory automation and monitoring method;
Figure 2 is a schematic diagram illustrating a data processing system adapted for factory automation and monitoring; and,
Figure 3 is a flow chart illustrating a factory automation and monitoring method.

### DETAILED DESCRIPTION OF THE INVENTION

Embodiments of the invention provide for the analysis of M2M communications amongst different controllers for different machines in a factory so as to predict state changes amongst the different machines in the factory. In accordance with an embodiment of the invention, data packets mirrored in a network switch are processed in an M2M communications analysis module as those data packets traverse the switch between controllers for the different machines in the factory. Thereafter, data is extracted from each of the data packets so as to determine a source controller and corresponding machine, and a contemporaneous state of the corresponding machine also is identified. The data in the data packets is then associated with the contemporaneous machine state of the corresponding state and the association is stored in a data store. Thereafter, as additional data packets are processed in the switch, the data in the additional data packets are compared to data in the data store to determine if a threshold variance exists between the data in the additional data packets and the stored data. If so, it is presumed then that the state of a corresponding ones of the machines has changed and an alert is generated in the M2M communications analysis module.

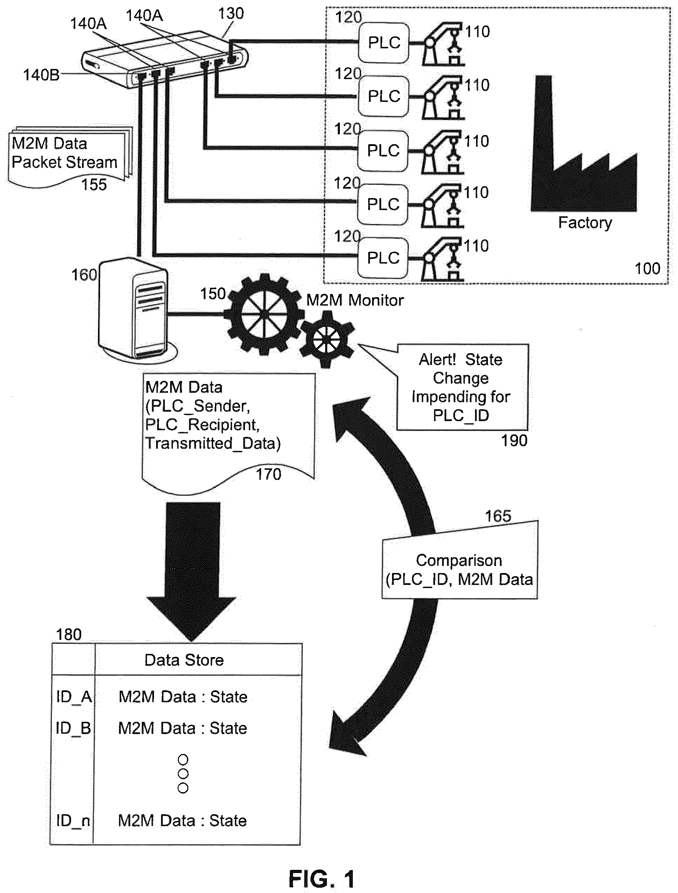

In further illustration, Figure 1 pictorially shows a factory automation and monitoring method. As shown in Figure 1, different machines 110 are disposed in a factory 100 so as to achieve a manufacturing process for producing a product within the factory 100. At least one computing element 120 is affixed to each of the different machines, for instance a PLC receiving relayed inputs from one or more sensors integrated with a corresponding one of the machines 110. The computing elements 120, in turn, are communicatively linked to one another over a common bus, as may be provided by a network switch 130. In the case of a network switch 130, each of the computing elements 120 is connected to the common bus by a corresponding communications port 140A.

Notably, a host computing platform 160 that includes memory and at least one processor is communicatively linked to a mirrored port 140B of the network switch 130 on which all network traffic visible on the communications ports 140A are duplicated and hence mirrored. A monitoring module 150 is then coupled to the host computing platform. In this regard, the monitoring module 150 includes program code that executes in the memory of the host computing platform 160. The program code monitors on the mirrored port 140B streams of data packets 155 of machine-to-machine (M2M) data between the computing elements 120. In this regard, each stream of data packets 155 is deciphered into multiplicity of values, each data packet 155 of which corresponds to one or more memory registers of a single, corresponding one of the computing elements 120. In this regard, each memory register may hold information about a particular component of a corresponding one of the machines 110, such as a sensor, or a memory register may hold control data generated by a computer program executing in memory by a processor of a corresponding one of the computing elements 120.

As such, the program code determines for the M2M data 170 of each of the data packet streams 155, a corresponding one of the machines 110 and acquires a contemporaneous state of a component of, or a portion of, the corresponding one of the machines 110. For instance, the contemporaneous state of the component or portion thereof may simply be the aggregation of values of the memory registers present in a data packet 155. Or, the contemporaneous state of the component or portion thereof may be a hash value computed based upon the values of the memory registers present in a data packet 155. Even further, the contemporaneous state of the component or portion thereof may be a computed value based upon the values of the memory registers present in multiple ones of the data packets 155 all pertaining to the same one of the machine 110.

In any event, then, the program code stores in data store 180, a record recording an association between the M2M data 170 for each of the data packet streams 155, the corresponding one of the machines 110 for each of the data packet streams, and the contemporaneous state for the corresponding one of the machines 110. The record may appear, in one non-limiting example, as follows:

| device | register | timestamp | value |
|---|---|---|---|
| PLC 1 | 120-5 | 20170810-01:23:10.458.194733 | 0.452 |

As it will be understood, the record for the contemporaneous state of the component or a portion thereof may contain many of the foregoing entries, for some subset of memory registers of an indicated PLC over a time period as indicated by many different timestamps.

Subsequently additional M2M data 170 is received in subsequently received data packet streams 155 in the mirrored port 140B. In response to the receipt of the additional M2M data 170 in the subsequently received data packet streams 155, the program code identifies for the additional M2M data 170, one of the machines 110, and retrieves for the identified one of the machines 110 a record from the data store 180. The additional M2M data 170 is then subjected to a comparison process 165 with the retrieved record from the data store 180. On the condition that the additional M2M data 170 demonstrates a threshold deviation from data in the retrieved record, an alert 190 is generated in respect to the identified one of the machines 110 that indicates a likely state change from a recorded contemporaneous state. For instance, in one simple embodiment, the M2M data 170 may be compared to values for the data in the retrieved record in order to determine if a threshold difference exists between the M2M data 170 and the values for the data in the retrieved record. In a more complex embodiment, however, the data in the retrieved record may be used to train a neural network to which the M2M data 170 ma be subjected in order to determine a threshold deviation. As well, other methodologies for performing the comparison may be employed, including utilizing the data in the retrieved record to compute a non-linear function which may then be applied to the M2M data 170 in order to determine a threshold deviation. Indeed, graph methodologies or hierarchical methodologies may be employed as well.

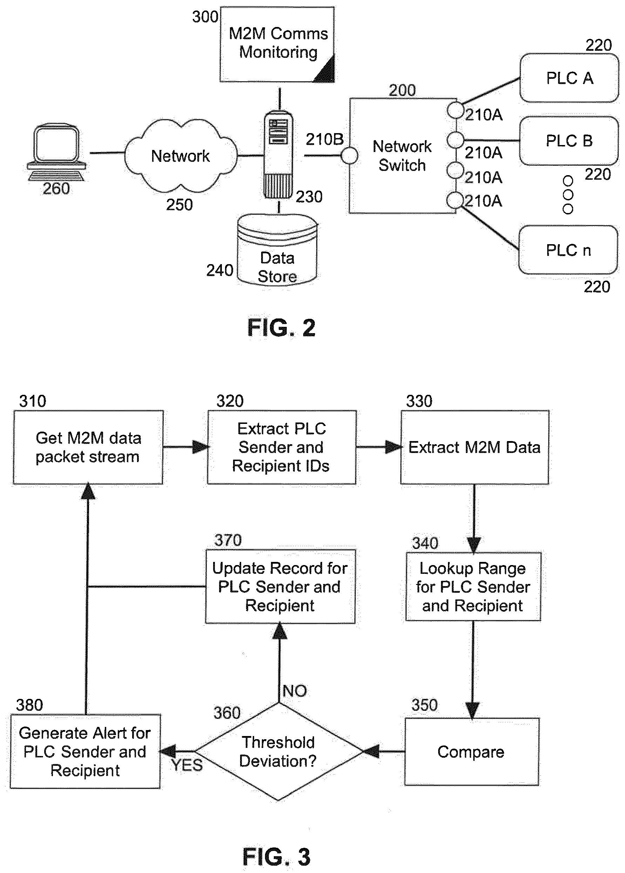

The process described in connection with Figure 1 may be implemented in a data processing system. In yet further illustration, Figure 2 schematically shows a data processing system adapted for factory automation and monitoring. The system includes a multiplicity of PLCs 220 each affixed to a different industrial machine and each in communication with one another over a network switch 200 and each communicatively linked to one another by way of a communications port 210A on the network switch 200, such that the network switch 200 acts as a bus for a private network formed of the different PLCs 220. A host computing platform 230 also is communicatively linked to the network switch 200 through a mirrored port 210 B onto which all M2M communications received in the different ones of the communications ports 210A are replicated onto the mirrored port 210B.

The host computing platform 230 includes memory and at least one processor and also a data store 240 into which data may be stored in the form of records. As well, the host computing platform 230 is coupled to one or more client computers 260 over computer communications network 250 such that the client computers 260 each may access program logic executing in the memory of the host computing platform 230 and each of the client computers 260 may access data in the data store 250 from over the computer communications network 250. Importantly, an M2M communications monitoring module 300 is disposed in the memory of the host computing platform 230.

The M2M communications monitoring module 300 includes program code that when executing in the memory of the host computing platform by the one or more processors of the host computing platform 230 is enabled to monitor streams of data packets of M2M data on the mirrored port 210B, for instance, by using a packet sniffer or other such program logic configured to monitor and log network traffic on a mirrored port. Based upon the monitoring of the streams of data, the program code of the module 300 additionally is enabled to determine for the M2M data of each of the data packet streams, a corresponding one of the PLCs 220 and thus a corresponding machine amongst the respective machines of the industrial machinery, a communications protocol utilized by the corresponding machine so that the content of the M2M data may be properly mapped to a template indicating which portions of the M2M data correspond to which fields of the communications protocol, and then acquire a contemporaneous state of the corresponding machine based upon the M2M data. The program code of the module 300 further is enabled to store in the data store 240, a record recording an association between the M2M data for each of the data packet streams, the corresponding machine for each of the data packet streams, and the contemporaneous state for the corresponding machine. Optionally, the M2M data may be aggregated for different M2M data packet streams for the corresponding machine and the aggregation may then be associated in a record in the data store 240 in connection with the corresponding machine.

Finally, the program code of the module 300 is enabled to subsequently receive additional M2M data in a subsequently received data packet stream in the mirrored port 210B of the network switch 200. In response to the receipt of the additional M2M data in the subsequently received data packet stream, the program code is enabled to identify for the additional M2M data, one of the machines, and retrieve for the identified one of the machines a record from the data store 240. Then, to the extent that the additional M2M data deviates by a threshold amount from data in the retrieved record, the program code of the module 300 is enabled to generate an alert in respect to the identified one of the machines indicating a likely state change from a recorded contemporaneous state.

In even yet further illustration of the operation of the program code of the M2M communications module 300, Figure 3 is a flow chart illustrating a factory automation and monitoring method. Beginning in block 310, an M2M data packet stream is received in a mirrored port of a network switch mirroring M2M data packet streams received through communications ports of the network switch. Optionally, a data protocol is identified for the M2M data packet stream and an associated protocol template retrieved for the identified data protocol. The template is then used to extract the M2M data and other information from the M2M data packet stream knowing the protocol by which the M2M data packet stream is structured. In block 320, an identity of a PLC sending the M2M data packet stream and an identity of a PLC receiving the M2M data packet stream from the PLC sending the M2M data packet stream is extracted from the M2M data stream. In block 330, the M2M data in the M2M data packet stream also is extracted from the M2M data packet stream. Optionally, the M2M data may be received from multiple different data packet streams for the identified PLC and aggregated.

In block 340, a range of values of the M2M data is retrieved from a data store in connection with either the sending one of the identified PLCs, the receiving one of the identified PLCs or both. In block 350, the range of values is compared to the M2M data (or the aggregated M2M data as the case may be) and in decision block 360, it is determined if a threshold deviation exists between the range of values and the retrieved M2M data. If not, in block 370 the range of values for the retrieved M2M data for the sending one the identified PLCs, the receiving one of the identified PLCs, or both, is updated in the data store to reflect the retrieved M2M data. Otherwise, in block 380 an alert is generated and displayed indicating a likely change in state for the sending one the identified PLCs, the receiving one of the identified PLCs, or both, in so far as the M2M data differs by a threshold value from the previously observed range of values for the M2M data whilst the sending one the identified PLCs, the receiving one of the identified PLCs, or both, had been in a prior, observed state.

The present invention may be embodied within a system, a method, a computer program product or any combination thereof. The computer program product may include a computer readable storage medium or media having computer readable program instructions thereon for causing a processor to carry out aspects of the present invention. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network. The computer readable program instructions may execute entirely on the user's computer, partly on the user's computer, as a stand-alone software package, partly on the user's computer and partly on a remote computer or entirely on the remote computer or server. Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein includes an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which includes one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Finally, the terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements are intended to include any structure, material, or act for performing the function in combination with other elements as specifically set forth. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A factory automation and monitoring method, **characterized by** comprising the following steps:
monitoring streams (155) of data packets of machine-to-machine, M2M, data on a mirrored port (140B, 210B) of a network switch (130, 200) coupled to computing elements (120, 220) of respective machines (110) amongst industrial machinery disposed in a factory (100), the M2M data having been communicated from one of the machines to another, each of the data packets corresponding to a memory register of a single, corresponding one of the computing elements;
determining (310-330) for the M2M data (170) of each of the data packet streams, a corresponding machine amongst the respective machines of the industrial machinery and acquiring a contemporaneous state of at least a portion of the corresponding machine;
storing, in a data store (180, 240), a record recording an association between the M2M data for each of the data packet streams, the corresponding machine for each of the data packet streams, and the contemporaneous state; and,
subsequently receiving (310-330) additional M2M data in a subsequently received data packet stream in the mirrored port of the network switch and, in response to the receipt of the additional M2M data in the subsequently received data packet stream, identifying for the additional M2M data, one of the machines, retrieving (340) for the identified one of the machines a record from the data store, and, on condition (360) that the additional M2M data demonstrates a threshold deviation from data in the retrieved record, generating (380) an alert (190) in respect to the identified one of the machines indicating a likely state change from a recorded contemporaneous state.

2. The method of claim 1, wherein the computing elements (120, 220) are programmable logic controllers.

3. The method of claim 1, wherein the monitoring of the streams utilizes a packet sniffer communicatively coupled to the mirrored port (140B, 210B) of the switch.

4. The method of claim 1, wherein the data in the data store (180, 240) is aggregated for different data packet streams for the corresponding machine and the aggregation is associated in a record in the data store in connection with the corresponding machine.

5. The method of claim 4, wherein the additionally received M2M data is received from multiple different data packet streams for the identified one of the machines and is aggregated and then compared (360) to the aggregated data in the data store for the corresponding machine so that on condition that the aggregated additionally received M2M data demonstrates a threshold deviation from the aggregated data in the data store, an alert (190) is generated (380) in respect to the identified one of the machines indicating a likely change from the contemporaneous state.

6. The method of claim 1, wherein a data protocol is first identified for the each of the data packet streams, an associated protocol template retrieved for the identified data protocol, and the template used to determine the M2M data of each of the data packet streams, the corresponding machine amongst the respective machines of the industrial machinery and the contemporaneous state of the corresponding machine.

7. A factory automation data processing system, **characterized by** comprising:
a network switch (130, 200) comprising a multiplicity of different communications ports (140A, 210A) and a mirrored port (140B, 210B) communicatively coupled to the multiplicity of different communications ports, each of the different communications port being communicatively linked to a respective one of a multiplicity of different computing elements (120, 220) for corresponding machines (110) amongst industrial machinery disposed in a factory (100);
a host computing platform (160, 230) comprising memory (180, 240) and at least one processor communicatively linked to the mirrored port; and,
a monitoring module comprising program code executing in the memory of the host computing platform, the program code performing:
monitoring streams (155) of data packets of machine-to-machine, M2M, data between the computing elements on the mirrored port, each of the data packets corresponding to a memory register of a single, corresponding one of the different computing elements;
determining (310-330) for the M2M data (170) of each of the data packet streams, a corresponding one of the machines and acquiring a contemporaneous state of at least a portion of the corresponding machine;
storing, in a data store (180, 240), a record recording an association between the M2M data for each of the data packet streams, the corresponding machine for each of the data packet streams, and the contemporaneous state; and, subsequently receiving (310-330) additional M2M data in a subsequently received data packet stream in the mirrored port and, in response to the receipt of the additional M2M data in the subsequently received data packet stream, identifying for the additional M2M data, one of the machines, retrieving for the identified one of the machines a record from the data store, and, on condition that the additional M2M data demonstrates a threshold deviation from data in the retrieved record, generating (380) an alert (190) in respect to the identified one of the machines indicating a likely state change from a recorded contemporaneous state.

8. The system of claim 7, wherein the computing elements (120, 220) are programmable logic controllers.

9. The system of claim 7, wherein the monitoring of the streams utilizes a packet sniffer communicatively coupled to the mirrored port (140B, 210B).

10. The system of claim 7, wherein the data in the data store (180, 240) is aggregated for different data packet streams for the corresponding machine and the aggregation is associated in a record in the data store in connection with the corresponding machine.

11. The system of claim 10, wherein the additionally received M2M data is received from multiple different data packet streams for the identified one of the machines and is aggregated and then compared (360) to the aggregated data in the data store for the corresponding machine so that on condition that the aggregated additionally received M2M data demonstrates a threshold deviation from the aggregated data in the data store, an alert (190) is generated (380) in respect to the identified one of the machines indicating a likely change from the contemporaneous state.

12. The system of claim 7, wherein a data protocol is first identified for the each of the data packet streams, an associated protocol template retrieved for the identified data protocol, and the template used to determine the M2M data of each of the data packet streams, the corresponding machine amongst the respective machines of the industrial machinery and the contemporaneous state of the corresponding machine.

13. A computer program product for factory automation and monitoring, the computer program product including a computer readable storage medium having program instructions embodied therewith, the program instructions executable by a device to cause the device to perform a method **characterized by** including the following steps:
monitoring streams (155) of data packets of machine-to-machine, M2M, data on a mirrored port (140B, 210B) of a network switch (130, 200) coupled to computing elements (120, 220) of respective machines (110) amongst industrial machinery disposed in a factory (100), the M2M data having been communicated from one of the machines to another, each of the data packets corresponding to a memory register of a single, corresponding one of the computing elements;
determining (310-330) for the M2M data (170) of each of the data packet streams, a corresponding machine amongst the respective machines of the industrial machinery and acquiring a contemporaneous state of at least a portion of the corresponding machine;
storing, in a data store (180, 240), a record recording an association between the M2M data for each of the data packet streams, the corresponding machine for each of the data packet streams, and the contemporaneous state; and,
subsequently receiving (310-330) additional M2M data in a subsequently received data packet stream in the mirrored port of the network switch and, in response to the receipt of the additional M2M data in the subsequently received data packet stream, identifying for the additional M2M data, one of the machines, retrieving (340) for the identified one of the machines a record from the data store, and, on condition (360) that the additional M2M data demonstrates a threshold deviation from data in the retrieved record, generating (380) an alert (190) in respect to the identified one of the machines indicating a likely state change from a recorded contemporaneous state.

14. The computer program product of claim 13, wherein the computing elements (120, 220) are programmable logic controllers.

15. The computer program product of claim 13, wherein the monitoring of the streams utilizes a packet sniffer communicatively coupled to the mirrored port (140B, 210B) of the switch.

16. The computer program product of claim 13, wherein the data in the data store(180, 240) is aggregated for different data packet streams for the corresponding machine and the aggregation is associated in a record in the data store in connection with the corresponding machine.

17. The computer program product of claim 16, wherein the additionally received M2M data is received from multiple different data packet streams for the identified one of the machines and is aggregated and then compared (360) to the aggregated data in the data store for the corresponding machine so that on condition that the aggregated additionally received M2M data demonstrates a threshold deviation from the aggregated data in the data store, an alert (190) is generated (380) in respect to the identified one of the machines indicating a likely change from the contemporaneous state.

18. The computer program product of claim 13, wherein a data protocol is first identified for the each of the data packet streams, an associated protocol template retrieved for the identified data protocol, and the template used to determine the M2M data of each of the data packet streams, the corresponding machine amongst the respective machines of the industrial machinery and the contemporaneous state of the corresponding machine.
